# EUROPEAN PATENT SPECIFICATION

(11) **EP 2 121 421 B1**
(45) Date of publication and mention of the grant of the patent: **07.11.2012**
(21) Application number: 08706938.1
(22) Date of filing: 21.02.2008
(51) Int. Cl.: B62J 6/06

(54) **TWO-PART GENERATOR FOR VEHICLES**
ZWEITEILIGER GENERATOR FÜR FAHRZEUGE
GÉNÉRATEUR EN DEUX PARTIES POUR VÉHICULES

(30) Priority: 21.02.2007 DK 200700268; 29.03.2007 DK 200700485
(43) Date of publication of application: 25.11.2009
(73) Proprietor: Reelight APS, 8260 Viby J (DK)
(72) Inventor: PEDERSEN, Troels, DK-2990 Nivå (DK)
(74) Representative: Plougmann & Vingtoft A/S
(86) International application number: PCT/DK2008/050044
(87) International publication number: WO 2008/101507

(56) References cited:
- EP-A- 1 165 361
- WO-A-01/33700
- WO-A-01/42079
- DE-A1- 4 229 457
- DE-A1- 19 908 557
- DE-A1-102004 011 511
- JP-A- 10 336 981
- JP-A- 63 107 446
- US-A- 5 128 840

## Description

### FIELD OF THE INVENTION

The invention relates to an electricity generator for vehicles, and in particular to a two-piece generator where the two parts are attachable to two vehicle-parts being rotatably fixed relative to the other.

### BACKGROUND OF THE INVENTION

It is know to use generators or dynamos on vehicles for powering electrical appliances. For example, tire dynamos or hub dynamos have been used for powering front and rear lights on bicycles. Tire dynamos are driven via frictional engagement with the tire and, therefore, are less attractive to the consumer due low efficiency and noise. Hub dynamos are noise-less, may have a higher efficiency. However, since they are mechanically complex, expensive, and are difficult to install on a bicycle, alternative vehicle generators are needed.

It is well known to make induction lamps based on induction, wherein e.g. one or more magnets in the wheel pass(es) by a coil mounted on a frame. Current is thereby induced into the coil, enabling LEDs etc. to emit light signals. EP1165361 discloses such system.

One of the drawbacks of this type of lamp is that up to several magnets of different polarisation are required in order that the direction of the field can be changed repeatedly during passage of the magnet.

DE 4229457 discloses a generator providing energy transmission between the rotating bicycle wheel and a current conductor winding electromagnetically. The current conductor winding is wound around a magnetisable metal core with an air-gap which is bridged periodically via at least one magnetisable metal element attached to the wheel. Preferably, the metal core comprises a permanent magnet attached to the bicycle frame, its air gap being bridged by metal elements at spaced points around the bicycle wheel, or a magnetisable metal piece with an air-gap bridged by permanent magnets attached to the wheel.

DE 19908557 discloses an electrical generator that has one or more soft magnetic or ferrite disc rotors (1) mounted on a rotor shaft (2) supported in rotor bearings (3,4), with a periodic outer contour for providing periodic variations in the magnetic resistance of the air-gaps (6) of concentric yoke elements (5) provided with an energizing winding or permanent magnets, for inducing an AC voltage in induction windings (8).

WO0142079 discloses an electromagnetic machine for a vehicle, especially for a bicycle according to the preamble of claim 1. The vehicle frame of said vehicle is provided with at least one coil system fastened to the frame. A magnetic return element is fastened to a rotating part of the vehicle and induces reversal of the magnetic flow in the coil system when rotated.

Whereas DE 4229457 provides an alternative to other generators for vehicles it is still desirable to improve generators for vehicles, for example by increasing the power generated by the generator, the generator efficiency and/or improving the mechanical design.

### SUMMARY OF THE INVENTION

Accordingly, the invention preferably seeks to mitigate, alleviate or eliminate one or more of the above mentioned problems singly or in any combination. In particular, it may be seen as an object of the present invention to provide an improved generator for vehicles capable of generating increased electric power possibly with an improved efficiency and possibly with a mechanical design that requires fewer parts as compared to known technologies. This is achieved by a device and a method device for generating electric current for a vehicle.

This object and several other objects are obtained in a first aspect of the invention as defined in claim 1.

The invention is particularly, but not exclusively, advantageous for generating electric power for vehicles.

Accordingly, the first part may be mounted on the wheel which is rotatably fixed relative to e.g. a fork holding the wheel, and the second part may be mounted on the fork so that relative passage of the first and second parts is enabled. The second part comprises an induction coil capable of generating electric current which may be used for powering a light, a computer or other electrical loads. Upon relative passage between the first and second parts, the magnetic field from the first part may increase or decrease the magnetic flux - created by the second magnet - in the core of the coil whereby a current is induced in the induction coil.

The second permanent magnet is magnetically connected to the core of the coil, for example by extending the core some distance beyond the coil and fixing the second magnet so that it abuts the extended core.

It may be an advantage that the device simplifies the construction since the coil is already magnetised before a magnet approaches the coil. This may be affected by a permanent magnet being mounted at the end of the coil or close to the coil and provides magnetisation to the coil. The first magnet passing the second part may neutralise this magnetisation or reverse the magnetisation, that is, the first permanent magnet may increase or decrease the static magnetic magnetisation.

In practice, the mounting of magnets being fixed relative to the coil and influencing the coil, so that their influence are reinforced or weakened by passage of magnets in the wheel, has proved to be an efficient way of limiting the number or the amount of necessary magnetic material in the magnets mounted in the wheel and passing the coil when the wheel is rotated.

In an embodiment, the second part may further comprise a second magnetically conducting structure magnetically connected to the second permanent magnet for forming two magnetic poles. The magnetically conducting structure may be a U-shaped structure connected to the core, or the core itself may form the magnetically conducting structure by extending the core beyond one end of the coil. The extended core may for example be bent to form a U-shaped structure.

Thus, by using a second magnetically conducting structure extended from the core or connected to the core the second magnet may be spaced more or less from the coil, for example by fixing the second magnet to a distal end of the magnetically conducting structure.

It may be an advantage to additionally use a second magnetically conducting structure in the second part, since for example a U-shaped structure may form two magnetic poles arranged for facing the first part. Thereby, the second part may be magnetised twice when the first part passes: One first time when the first part passes the first magnetic pole of the second part, and a second time when the first part passes the second magnetic pole. Thus, the use of a magnetically conducting structure in the second part may improve the generation of electric current and the efficiency of the generator.

In an embodiment, the first part further comprises a first magnetically conducting structure being magnetically connected to the first permanent magnet for forming two magnetic poles. The magnetically conducting structure of the first part may be a U-shaped or a bar shaped structure where the first magnet is magnetically connected this structure, for example by attaching the first magnet at one end of the bar shaped structure.

It is appreciated that the magnetically conducting structure of the first and second parts may be U-shaped, bar shaped or have any other shape suitable e.g. for mounting on the first or second vehicle-parts.

It may be an advantage to additionally use a first magnetically conducting structure in the first part, since this structure may form two magnetic poles arranged for facing the second part. Thereby, the second part may be magnetised twice when the first part passes: One first time when the first magnetic pole of the first part passes the pole of the core of the second part, and a second time when the second magnetic pole of the first part passes the magnetic pole of the second part. Thus, the use of a magnetically conducting structure in the first part may improve the generation of electric current and the efficiency of the generator.

In an embodiment the two magnetic poles of the first part are arranged for magnetically connecting or bridging with the two magnetic poles of the second part upon passage of the first part relative to the second part. Accordingly, in this embodiment both the first and second parts comprise a magnetically conducting structure for forming two poles both of the first part and the second part.

It may be an advantage to use a magnetically conducting structure in both the first and second parts, since the pair of poles of the first part magnetically connects with the pair of poles of the second part. Thereby, the magnetic losses between the first and second parts may be reduced and generator efficiency improved, since the poles of the first part faces the poles of the second part upon passage of the parts.

In an embodiment the first part and the second part forms a substantially closed magnetic circuit when the poles of the first part oppose the poles of the second part. Thus, when the first part forms a magnetically conducting structure with two poles which are able to face the corresponding poles of the magnetically conducting structure of the second part, a substantially closed magnetic circuit is formed so that the magnetic flux in the core of the coil is easily changed upon passage of the first part relative to the second part.

In an embodiment the second magnetically structure of the second part comprises a section of non-magnetic material.

In another embodiment first magnetically conducting comprises a section of non-magnetic material.

In may be an advantage to use non-magnetic material in the first part and/or the second part since this may make is easier for the magnetic field of the passing first part to alter the magnetic flux in the core of the coil. The non-magnetic material may have a length of a few millimetres, preferably less than 12 mm, more preferred less than 6 mm, possibly less than 4 mm.

In an embodiment the windings of the coil is connected to an electrical consumer, for example a light.

A second aspect the invention relates to a light for a vehicle comprising the device according to the first aspect and a light source electrically connected with the coil. Thus, the light may comprise the first part and the second part, where coil of the second part is connected with a light emitting device. The second part may be contained in a container with an optically transparent surface allowing transmission of the light, for illuminating the road ahead.

In a third aspect the invention relates to a method for generating electric current as defined by claim 8.

The first, second and third aspects of the present invention may each be combined with any of the other aspects. These and other aspects of the invention will be apparent from and elucidated with reference to the embodiments described hereinafter.

Accordingly, the present invention concerns an induction lamp based on one or more magnets passing by a pre-magnetised coil. Current is thereby induced into the coil usable for driving electronics and/or LEDs, enabling the lamp to flash or emit light as well perform various electronic signal processings, including the registration of the movement of the bicycle, or send various signals, including a signal that can be registered by e.g. cars, lorries or light signals within a range of 3-4 metres.

In summary, the invention relates to a generator for vehicles for generating electric current. The generator includes a first part and a second part. The first part, which may be fixed to the spokes of a bicycle wheel, includes a first permanent magnet. The second part includes a second permanent magnet and a coil. The second part may be fixed to the frame of the bicycle, such as the front fork, so that an electric current is induced in the coil when the first part passes the second part. The windings of the coil may be connected to the lights of the bicycle, which lights, e.g. light emitting diodes, may be integrated with the second part.

### BRIEF DESCRIPTION OF THE FIGURES

The present invention will now be explained, by way of example only, with reference to the accompanying Figures, where
Figs. 1A-B shows a generator where both the first and second parts comprises permanent magnets,
Fig. 2 shows how the first and second parts may be mounted on vehicle-parts,
Fig. 3 shows an embodiment of the generator where the first and second parts additionally comprises yokes of magnetically conducting material,
Fig. 4 shows an alternative embodiment of the generator with an alternative placement of the second permanent magnet,
Figs. 5A-B shows alternative embodiments of the generator using a gap of non-magnetic material in the second part,
Figs. 6A-C shows alternative embodiments of the generator with a larger number of magnetic poles of the first and second parts.

### DESCRIPTION OF AN EMBODIMENT

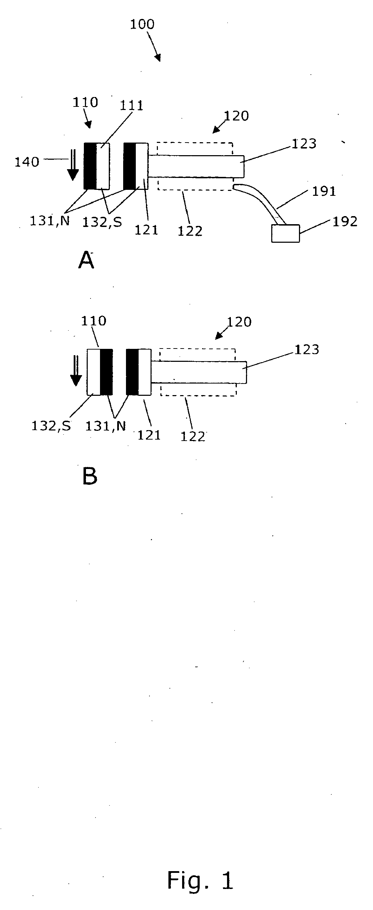

Fig. 1A shows a generator 100 to be used with vehicles, e.g. bicycles, for generating electric current. The generator 100 comprises a first part 110 and a second part 120. The first part 110 comprises a first permanent magnet 111, for example a Samarium Cobalt or a Neodymium magnet, having a north pole 131 and a south pole 312. The second part 120 comprises a second permanent magnet 121, a coil 122 with a core 123. The second permanent magnet 121 may be a type similar to the first permanent magnet. The coil 122 is constituted by a number of windings of electrical conducting wire, also known as a solenoid. The coil 122 comprises a core 123, which core may be constituted of ambient air or made of some solid material. In an embodiment, the core 123 is a cylindrical rod of magnetically conducting material, e.g. soft iron. The windings of the coil 122 may be wound around the core 123. As shown in Fig. 1A, the second permanent magnet 121 abuts the core 123. The second permanent magnet 121 may be attached to the core 123 by use of mechanical fastening means, e.g. a screw, or by use of adhesives.

The second permanent magnet 121 establishes a static magnetic field or a static magnetic flux through the core 123 of the coil 122. Thus, the purpose of the second permanent magnet 121 is to subject the coil 122 to a static and permanent magnetic field. The static magnetic flux may be understood as the flux caused by the second permanent magnet 121, when no other magnetically conductive materials or other permanent magnets are nearby the second part 120. Thus, the permanent magnetic flux or field from the second permanent magnet 121 is referred to as a static magnetic flux or field; or as the otherwise static magnetic flux, since otherwise the first magnet affects the second magnet the flux is static or at least quasi-static.

In Fig. 1A the second part 120 is considered to be attached to some support structure (not shown), whereas the first part 110 is attached to another structure (not shown) movably fixed relative to the support structure, so that the first part 110 is able to move relative to the second part 120, illustrated by arrow 140. In this way, a pole of the first part 110 is able to pass a pole of the second part 120. Equivalently, the first part 110 may be attached to the support structure, whereas the second part 120 may be attached to the other structure movably fixed relative to the support structure, so that the second part 120 is able to pass the first part 110.

When the first part 110 approaches the second part 120, the first permanent magnet 111 will cause a change of the amplitude of the static magnetic flux through the core 123, either by causing an increase or a decrease of the static magnetic flux. The change in the static magnetic flux induces an electromotive force (emf) in the coil according to Faraday's law of electromagnetic induction. By connecting the ends 191 of the winding of the coil 122 to an electric load 192, e.g. a bicycle light, the electric load 192 will be powered by the electric current generated in the coil 122. Thus, the motion of the bicycle or other vehicle will operate the generator 100 to produce electric power for the bicycle's front and rear lights and possible other electrical consumers.

For convenience it will be said that the change in the magnetic flux induces or generates a current in the coil, even when no electric load 192 is connected to the wire ends 191. Clearly, this is not physically correct, by simplifies the description of embodiment of the invention.

In Fig. 1A the first and second permanent magnets are oriented so that a magnetic south pole 132,S of the first part 110 faces a magnetic north pole 131,N of the second part 120 and, thereby, causes an increase of the static magnetic flux from the second permanent magnet 121 upon passage of the first part 110 relative to the second part 120.

In Fig. 1B the first and second permanent magnets are oriented so that a magnetic north pole N of the first part 110 faces a magnetic north pole N of the second part 120 and, thereby, causes a decrease of the static magnetic flux from the second permanent magnet 121 upon passage of the first part 110 relative to the second part 120.

Both embodiments of Fig. 1A and Fig. 1B causes a change of the static magnetic flux upon movement/passage of the first part relative to the second part, which change in the permanent magnetic flux is capable of energizing the load 192 by induction of a current in the coil 122.

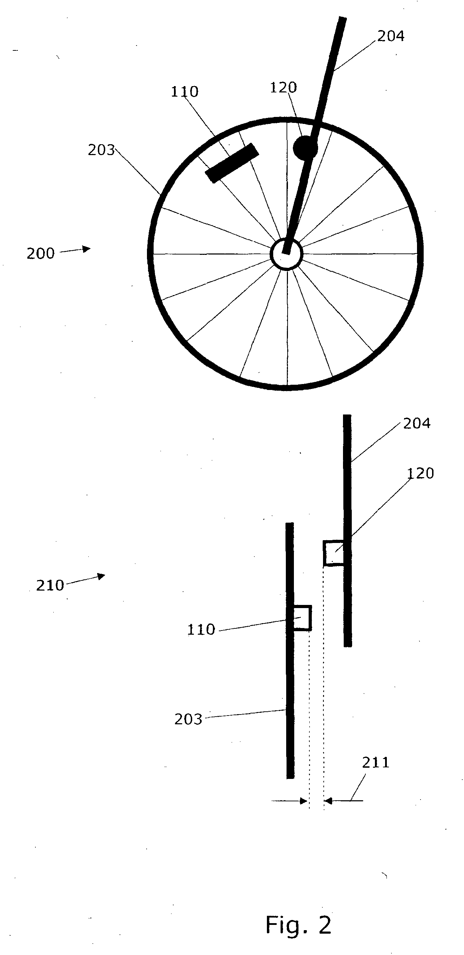

Fig. 2 shows a side view 200 of a bicycle where the first part 110 of the generator 100 is mounted on a first vehicle part 203, e.g. the spokes of a wheel 203 and the second part 120 is mounted a second vehicle part 204, e.g. on the front fork 204. When the wheel 203 rotates, the first part 110 will repeatedly pass the second part so that the generator 100 repeatedly generates pulses of electric current.

The first and second parts may be mounted using conventional mounting means, e.g. metal fittings.

Fig. 2 also shows a front view 210 which shows that the first part 110 and the second part 120 are mechanically separated by a distance 211. Thus, since the first part is not mechanically connected with the second part, any frictional losses between the two generator parts 210,220 are eliminated.

It is understood that alternatively the second part 220 may be mounted on the wheel 203 and the first part 210 may be mounted on the fork 204, so the movement of the first part relative to the second part generates an electric current in the coil. Thus, it is clear that the relative motion of the first part 110 and the second part 120 generates electric current, whether the first part 110 or the second part 120 is mounted on a rotatable vehicle-part.

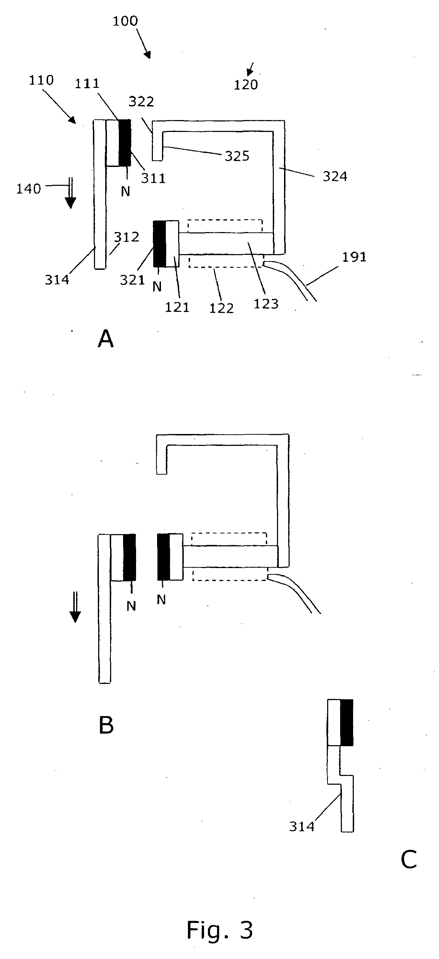

Fig. 3A and 3B show an embodiment of the generator 101 where the second part 120 additionally comprises a second magnetically conducting structure or a second yoke 324. The yoke 324 is magnetically connected to the second permanent magnet 121 via the core 123 for forming two magnetic poles, a first pole 321 constituted by the second permanent magnet 121 and a second pole 322 constituted by the projection 325 of the yoke. The magnetisation of the second pole 322 will be magnetically opposite to the first pole 321, i.e. if the first pole 321 is a north pole N, the second pole 322 will be a south pole S.

The second yoke 324 may be made of magnetically conducting material, such as soft iron. The yoke 324 may be fixed to the core 123, e.g. with a screw, or the yoke and core may be made of the same piece of soft iron or laminated soft iron.

In the embodiment of Fig. 3A and 3B the first part 110 additionally comprises a first magnetically conducting structure or first yoke 314 being magnetically connected to the first permanent magnet 111 for forming two magnetic poles, a first pole 311 constituted by the first permanent magnet 111 and a second pole 312 constituted by the end of the yoke 314. The magnetisation of the second pole 312 will be magnetically opposite to the first pole 311, i.e. if the first pole 311 is a north pole N, the second pole 312 will be a south pole S. The second pole 312 may likewise be formed by a projection of the yoke 314 as shown in Fig. 3C.

In alternative embodiments, either the first part 110 or the second part 120 may comprise a magnetically conducting structure.

The first and second poles 311,312 of the first part 110 and the first and second poles of the second part 120 are separated in direction of the relative movement 140 of the first and second parts. Thus, the first and second part may be designed so that, when the first part is mounted the spokes of a wheel and the second part is mounted on the fork at a position corresponding to the radial position of the first part as shown in Fig. 2, the second pole 312 of the first part may initially pass the second pole 322 of the second part, the first pole 311 of the first part may subsequently pass the second pole of the second part.

Thus, the distance between the first and second poles 311,312 of the first part may be selected to match the distance between the first and second poles 321, 322 of the second part, so that the yoke 314 of the first part bridges with the yoke 324 of the second part, via the first and second poles 311,312 of the first part and respective second and first poles 322,321 of the second part.

Therefore, the first part 110 and the second part 120 form a substantially closed magnetic circuit when the poles 111,112 of the first part 110 oppose the poles 121,122 of the second part 120. The static magnetic flux of the second magnet 121 is affected both due to the bridging effect of the yoke 314 of the first part 110 and due to the presence of the first permanent magnet 111 in the closed magnetic circuit.

When poles 311, 312 of the first part 110 face, approaches or leaves the poles 321, 322 of the second part 120 as illustrated in Fig. 3A, the static magnetic flux from the second permanent magnet 121 - which were transmitted through the core 123, the yoke 324 and the air gap between the projection 325 and the first magnet 111 - will be affected by an additional magnetic flux from the first magnet 111. With the orientation of the first and second magnets shown in Fig. 3A, the magnetic fluxes of the first and second magnets 111,121 have the same directions and, therefore, the otherwise static magnetic flux from the second magnet 121, is increased or amplified by the first magnet 111 or more precisely, by the magnetic flux from the first magnet 111. Had the first permanent magnet 111 been oriented so that a south pole S, instead of a north pole N, faced the projection 325, the static magnetic flux from the second magnet 121 would be decreased or damped by the first magnet 111.

Whether the static magnetic flux from the second magnet 121 is amplified or damped by the first magnet 111, the resulting change of the magnetisation of the core 123 will induce a current in the coil 122.

I addition to the first permanent magnet 111, the first yoke 314 will cause an increase of the otherwise static magnetic field, since the magnetically conducting yoke 314 bridges or connects the pole 322 of the projection 325 to the pole 321 of the second magnet 121. Thus, the magnetic flux is influenced by a lower magnetic resistance due to the presence of first yoke 325 as compared to the non-presence of the yoke 325. The resulting increase of magnetic flux increases the magnetisation of the core 123 and, therefore, a current is induced in the coil 122.

Thus, with the orientation of the first permanent magnet 111 shown in Fig. 3A, the combination of first permanent magnet 111 and the first yoke 314 will cause an increase of the magnetic flux in the magnetic circuit comprised by the first and second parts 110 and 120, which increase of the magnetic flux is greater than the either of the flux contribution from the first magnet 111 or the first yoke 314 taken alone. Thus, it may be an advantage to use a yoke 314 in combination with a permanent magnet 111, since the combination may provide improved power generation by the generator 100.

When the first part 110 has moved some distance relative to the second part 120, so that the first magnet 111 is approaching, facing or is moving away from the first pole 321 of the second magnet 121, as illustrated in Fig. 3B, the north pole N of the first magnet 111 will face the north pole N of the second permanent magnet 121, which will cause a decrease or damping of the otherwise static magnetic flux from the second permanent magnet 121. The reason for the decrease in magnetic flux is that the magnetic fields from the first and second magnets are directed oppositely so the two opposite magnetic fields merely cancels each other. The decrease of magnetic flux induces a current in the coil 122.

Thus, when the first part 110 of the generator 100 approaches the second part 120, the magnetic flux increases until a maximum magnetic flux is achieved when the poles of the first part 110 faces the poles of the second part 120. As the first part 110 moves further, the magnetic flux starts decreasing, until a minimum magnetic flux is achieved when the north pole 311 of the first part faces the north pole 321 of the second part. As the first part 110 moves away from the second part, the magnetic flux increases again until the flux equals the level of the static magnetic flux.

Clearly, the first and second magnets 111,121 may be reversed, so that two south poles S faces each other in the situation shown in Fig. 3B - in that case the magnetic flux changes is similar to the flux changes of the generator where two north poles N faces each other in the situation shown in Fig. 3B.

Alternatively, either the first magnet 111 or the second magnet 121 may be reversed - in that case the flux changes are merely opposite to the flux changes described above in connection with the design of Fig. 3A-B*. That is, the magnetic flux is minimum in the equivalent situation of Fig. 3A and maximum in the situation of Fig. 3B.

In other words, Fig. 3A shows an embodiment wherein the coil is provided with a magnetically conductive core. This core ends in a permanent magnet attached close to one end of the coil. The other end of the core is elongated or provided with a magnetically conductive yoke capable of conducting magnetism from a region in which the movable magnet passes to the other end of the coil. Fig. 3A shows an embodiment wherein the moving part, which is e.g. attached to the spokes of the wheel, passes in a way that reinforces the magnetic field through the core of the coil. However, in the position of Fig. 3B it has a diminishing effect on the strength of the magnetic field through the core of the coil. The change thus achieved in the intensity of the magnetic field of the coil is what results in the induction in the coil.

In the situation shown in Fig. 3B the repelling forces between the first and second magnets 111,121 may be exploited in a mechanism for automatic adjustment of the air gap 211. For example the first permanent magnet 111 may be supported by a spring or the whole first part 314 may be supported by a spring, so that the repelling force displaces the first magnet 111 upon the first magnet's passage of the second magnet. Thus, by selecting a suitable stiffness of the spring, a suitable air gap 211 may obtained which is not too large so that the magnetic flux is damped and not too small so that the first part may impact the second part upon relative passage. For example, the yoke 314 may be supported by springs, e.g. two springs mounted at the ends of the yoke 314, which springs are connected to a support plate which is fixed to e.g. the spokes of the wheel.

In an embodiment, the first permanent magnet 111 may have a stronger magnetic field than the second permanent magnet 121. For example, the first and second permanent magnets may have equal surface areas of the facing poles, but the first permanent magnet 111 may have a thickness of 2.5 mm whereas the second permanent magnet 121 may have a thickness of 1 mm. The gap 211 may be approximately 2 or 3 mm, in which case the first magnet 111 is able to suppress the magnetic flux of the second permanent more or less. Experiments have shown that flux in the core 123 changed from 0.9 Tesla to 0.2 Tesla upon passage of the first magnet 111 relative to the second magnet 121.

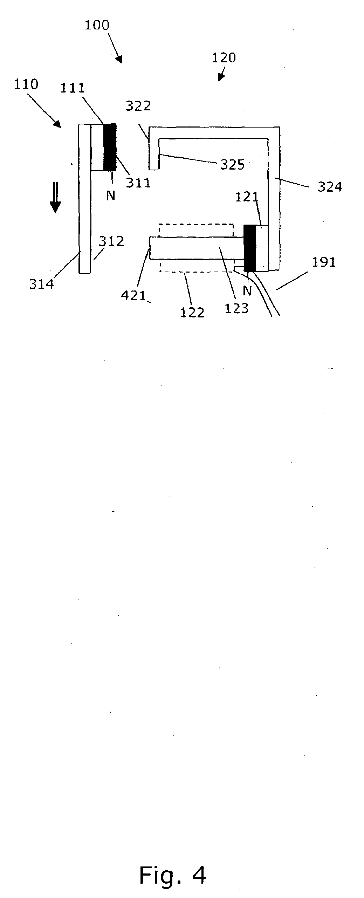

Fig. 4 shows a variant of the generator from Fig. 3, where the second permanent magnet 121 is positioned between the core 123 and the yoke 324 and where the end of the core 123 facing the first part 110 forms the first pole 421 of the second part. With the orientation of the second magnet 121 as shown in Fig. 4, the pole 421 will be a north pole and the pole 322 will be a south pole so that the second part 120 of Fig. 4 has the same magnetic poles as the second part of Fig. 3. Accordingly, the function of the generator depicted in Fig. 4 is equivalent to the generator depicted in Fig. 3, that is, the change of the static magnetic flux affected by the passing of the first part 110 relative to the second part 120 is equivalent for the both generators of Fig. 3 and Fig. 4.

In other words, Fig. 4 shows another variant wherein the second magnet 121 is attached between the "farthest" end of the coil and a yoke or armature of a magnetically conductive material. Thus, in Fig. 4 the magnet is in contact with the core of the coil.

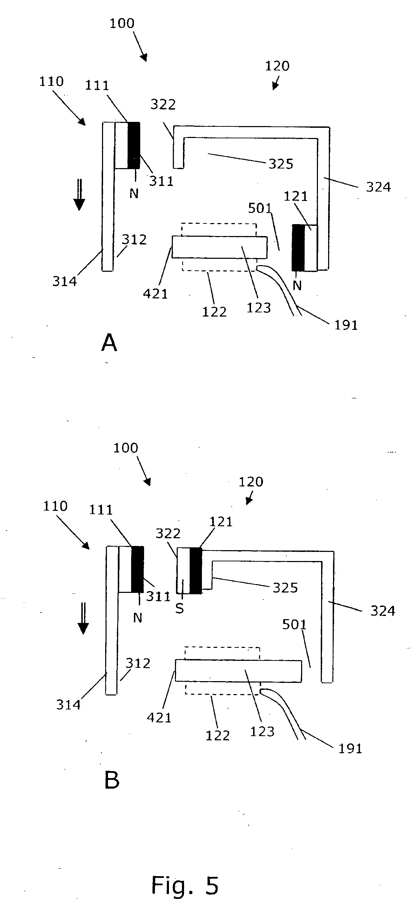

Fig. 5A shows a variant of the generator from Fig. 4, where a gap 501 is provided between the core 123 and the second permanent magnet 121. The gap 501 may be a gap of ambient air, plastic or other non-magnetic material. The gap 501 may improve the performance of the generator 100, since the presence of the gap 501 may ease generation of changes of the static magnetic flux affected by the motion of the first part 110. In other words, the presence of the gap 501, may make it easier for the first part 110 to change the static magnetic field in the core 123, due to the magnetic resistance provided between the second permanent magnet 121 and the core 123.

The air gap 501 may be incorporated into the mounting of the parts, or by inserting a piece of non-magnetic material, e.g. plastics, in the joint, in order to deliberately create an air gap. The air gap contributes to the passing magnet more easily being able to influence the coil core.

Fig. 5B shows a variant of previous generators depicted in Figs. 3-5B, where the second permanent magnet has been positioned at the end of the yoke 324 farthest away from the coil 122 and core 123.

In other words, Fig. 5B shows another variant wherein the second permanent magnet 121 is located at the other end of the yoke. Again it is possible to choose whether the yoke should be in direct contact with the core of the coil, or whether an air gap should be in incorporated.

The function and generation of changes of the magnetic flux of the generators shown in Fig. 5A and 5B are equivalent to the generators depicted in Figs. 3-4.

Other generators 100 working the same way as the generator variants shown in Fig. 3-5B may be designed by forming the yoke differently, placing the coil 122 other places, such as at the upright part of the yoke 324, and positioning the second permanent 121 magnet differently.

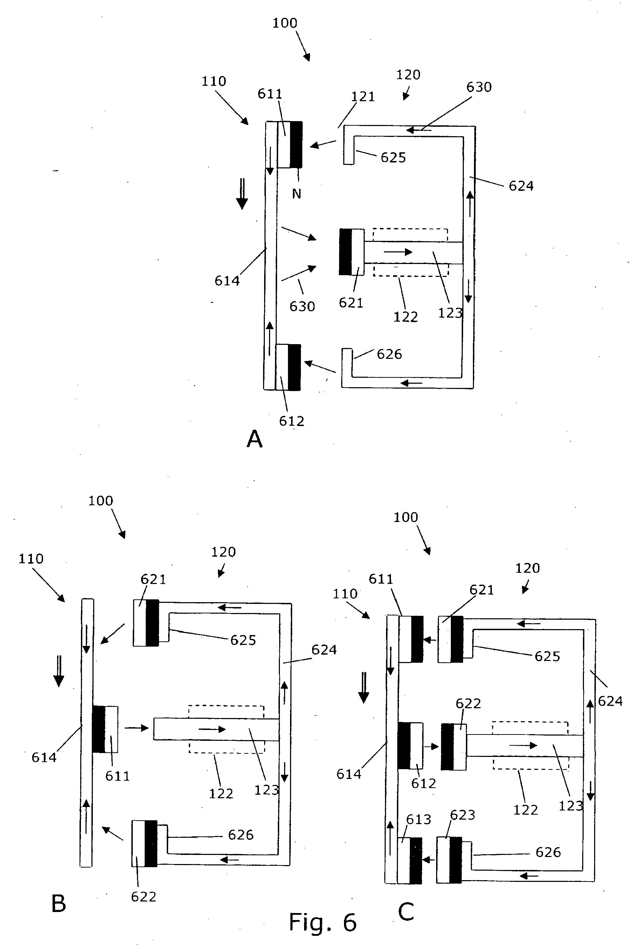

Figs. 6A-6C shows embodiments of the generator 100 based on the same principle as the generators 100 of Figs. 1-5. Thus, the generator 100 shown in Fig. 6A comprises a first part 110 with two first permanent magnets 611 and 612, and a second part 120 with a second yoke 624 with two projections 625 and 626 and with a second permanent magnet 621. With the relative position between the first part and the second part depicted in Fig. 6A, the north poles N of the two first permanent magnet 611 and 612 faces the south poles S of the projections 625 and 626. With this relative position between the first part and the second part, the otherwise static magnetic flux from the second permanent magnet 621 is increased due to the two magnetic fluxes from the two first magnets 611,612, and the first yoke 614. The path of the magnetic fluxes is illustrated by the arrows 630 in Fig. 6A. Thus, the magnetic flux from the second permanent magnet 621 propagates through the core 123 and through the two arms of the second yoke 624, towards the projections 625 and 626 and through the two first magnets 611 and 612 which magnets increase the otherwise static magnetic field. The increased or amplified magnetic flux propagates through the centre region of the first yoke 614 towards and through the second permanent magnet 621 and through the core 123 where the change in the magnetic flux induces a current in the coil 122.

The above description of the propagation of the magnetic flux should not be understood as a physically correct explanation but rather as a functional explanation of how the amplitude of the magnetic flux in the magnetic circuit comprised the first and second parts 110,120 is affected by the approaching or leaving first part 110.

The generator 100 shown in Fig. 6A may benefit from using two first permanent magnets 611 and 612, since the fluxes from to magnets may cause greater changes in the otherwise static flux from and, thereby, generation of greater power from the coil 122 as compared to a first part 110 with only one first permanent magnet 611, 111.

Fig. 6B shows a variant of the generation from Fig. 6A wherein and a magnet 621,622 is located at the end 625,626 of each arm of the magnetic yoke of the coil 122, and only one single magnet 611 is mounted in the yoke 614 of the wheel. Thereby the total number of permanent magnets to be used is minimised in that here only one magnet is required in the wheel. Typically, 2-3 magnets will be distributed in the wheel, and here a total of three magnets are required plus two magnets on the coil.

Fig. 6C shows a variant with magnets on all pole shoes of the first and second parts. The advantage of this version is that the magnetic field will be able to skip quite large air gaps without a very large marginal loss of magnetisation. In certain positions there will still be repelling forces desirable for a mechanism for automatic air gap adjustment.

Further embodiments of the inventions are listed below:
An induction lamp or a generator 100 including:
   A) a magnetic source comprising one or more permanent magnets, said one or more magnets being connected or kept on magnetically conductive parts,
   B) a coil with a' magnetically conductive core,
   C) one or more permanent magnets attached to the core by the coil, to a yoke attached to the coil, or close to the coil, in order that it continues to exert magnetic influence on the coil,
   D) electronics or a light source in the form of a light-emitting diode (LED) characterised in the magnetic source being movable relative to the coil and the permanent magnet thereof, whereby change of the flux through the coil is rendered possible, causing induction to occur in the coil.

An induction lamp characterised in that the magnetic source consists of a permanent magnet.

An induction lamp characterised in that the magnetic source is a permanent magnet attached to a magnetically conductive member, e.g. a metal bracket, or a metal fitting.

An induction lamp characterised in that the magnetic source consists of 2 or more permanent magnets attached to or almost in contact with a magnetically conductive member, e.g. a metal bracket, or a fitting.

An induction lamp characterised in that the magnetic source is attached to the wheel of the bicycle, e.g. to the spokes of the wheel.

An induction lamp according to any of the preceding claims, characterised in that each wheel has more than one magnetic source, including 2 and 3 magnetic sources.

An induction lamp characterised in that the coil has a magnetic source - in the form of a permanent magnet - attached to, or close to, any end of the core of the coil.

An induction lamp characterised in the core of the coil being U-shaped when in contact with or under the magnetic influence of a yoke.

An induction lamp characterised in that a permanent magnet influences or is in direct contact with the yoke or the coil core.

An induction lamp wherein the induction is utilized to drive one or more LEDs emitting light.

An induction lamp wherein the magnetic source, coil and electronics/LED are encapsulated and mounted, by means of fittings, on a bicycle.

An induction lamp characterised in that the coil is under the influence from two magnetic sources that are fixed relative to the coil.

An induction lamp characterised in that the magnetic forces occurring when the magnetic source passes the coil, are used to drive a mechanism adjusting the air gap between the coil and the magnetic source in the wheel.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A device (100) for a bicycle for generating electric current, the device comprising first and second parts (110,120) attachable to vehicle-parts (203, 204) of the bicycle, one of the vehicle-parts being a wheel being rotatably fixed relative to the other, where
- the second part (120) comprises at least one magnetic pole, a coil (122) with a core (123) and a second permanent magnet (121), magnetically connected to the core, for subjecting the core to a static magnetic flux, and **characterised in that**
- the first part (110) comprises at least one other magnetic pole arranged to face the second part upon passage of the first part relative to the second part, a first permanent magnet (111) for causing a change of the static magnetic flux, upon passage of the first part relative to the second part, which change in the static magnetic flux is capable of generating an electric current in the coil, where
- the second part further comprises a second magnetically conducting structure (324) magnetically connected to the second permanent magnet for forming first and second magnetic poles (321, 322), so as to enable magnetization of the second part first and second times when the first part passes the second part, and/or where
- the first part further comprises a first magnetically conducting structure (314) being magnetically connected to the first permanent magnet for forming first and second magnetic poles (311, 312), so as to enable magnetization of the second part first and second times when the first part passes the second part.

2. A device according to any of the preceding claims, where the two magnetic poles of the first part (110) are arranged for magnetically connecting with the two magnetic poles of the second part (120) upon passage of the first part relative to the second part.

3. A device according to any of the preceding claims, where the first part and the second part forms a substantially closed magnetic circuit when the poles of the first part oppose the poles of the second part.

4. A device according to any of the preceding claims, where the second magnetically conducting structure comprises a section of non-magnetic material (501).

5. A device according to any of the preceding claims, where the first magnetically conducting structure comprises a section of non-magnetic material.

6. A device according to any of the preceding claims, where windings (191) of the coil are connected to an electrical consumer (192).

7. A light for a vehicle comprising the device according to claim 1 and a light source electrically connected with the coil.

8. A method for generating electric current for a bicycle using a device comprising first and second parts attachable to vehicle-parts of the bicycle, one of the vehicle-parts being a wheel being rotatably fixed relative to the other, where
- the second part (120) comprises at least one magnetic pole, a coil (122) with a core (123) and a second permanent magnet (121), magnetically connected to the core, for subjecting the core to a static magnetic flux, and **characterised in that**
- the first part (110) comprises at least one other magnetic pole arranged to face the second part upon passage of the first part relative to the second part, a first permanent magnet (111) for causing a change of the static magnetic flux, upon passage of the first part relative to the second part, which change in the static magnetic flux is capable of generating an electric current in the coil, where
- the first part further comprises a first magnetically conducting structure (314) being magnetically connected to the first permanent magnet for forming first and second magnetic poles (311, 312), and/or
- the second part further comprises a second magnetically conducting structure (324) magnetically connected to the second permanent magnet for forming first and second magnetic poles (321, 322), where the method comprises
- exposing the core of the coil of the second part to the static magnetic flux created by the second permanent magnet, magnetically connected to the core, and
- repeatedly passing the first part comprising the first permanent magnet relative to the second part for causing a change of the static magnetic flux, which change in the static magnetic flux is capable of generating an electric current in the coil, where each passage of the first part relative to the second part magnetizes the second part first and second times due to the first and second poles (321, 322; 311, 312) of the first part and/or the second part.

## Patentansprüche

1. Vorrichtung (100) für ein Fahrrad zum Erzeugen von elektrischem Strom, wobei die Vorrichtung ein erstes und ein zweites Teil (110, 120) umfasst, die lösbar an Fahrzeugteilen (203, 204) des Fahrrads befestigt sind, wobei eines der Fahrzeugteile ein Rad ist, das in Bezug zu dem anderen drehbar befestigt ist, wobei
- das zweite Teil (120) mindestens einen magnetischen Pol, eine Spule (122) mit einem Kern (123) und einen zweiten Permanentmagneten (121) umfasst, der magnetisch mit dem Kern verbunden ist, um den Kern einem statischen magnetischen Fluss auszusetzen, und **dadurch gekennzeichnet, dass**
- das erste Teil (110) mindestens einen weiteren magnetischen Pol umfasst, der beim Passieren des ersten Teils am zweiten Teil dem zweiten Teil gegenüber angeordnet ist, einen ersten Permanentmagneten (111), der beim Passieren des ersten Teils am zweiten Teil eine Änderung des statischen magnetischen Flusses verursacht, wobei die Änderung des statischen magnetischen Flusses einen elektrischen Strom in der Spule erzeugen kann, wobei
- das zweite Teil weiterhin eine zweite magnetisch leitende Struktur (324) umfasst, die magnetisch mit dem zweiten Permanentmagneten verbunden ist, um einen ersten und zweiten magnetischen Pol (321, 322) zu bilden, um so die Magnetisierung des zweiten Teils ein erstes und ein zweites Mal zu ermöglichen, wenn das erste Teil das zweite Teil passiert, und/oder wobei
- das erste Teil weiterhin eine erste magnetisch leitende Struktur (314) umfasst, die magnetisch mit dem ersten Permanentmagneten verbunden ist, um einen ersten und zweiten magnetischen Pol (311, 312) zu bilden, um so die Magnetisierung des zweiten Teils ein erstes und ein zweites Mal zu ermöglichen, wenn das erste Teil das zweite Teil passiert.

2. Vorrichtung nach einem der vorhergehenden Ansprüche, wobei die zwei magnetischen Pole des ersten Teils (110) derart angeordnet sind, dass sie sich beim Passieren des ersten Teils am zweiten Teil mit den beiden magnetischen Polen des zweiten Teils (120) magnetisch verbinden.

3. Vorrichtungen nach einem der vorhergehenden Ansprüche, wobei das erste Teil und das zweite Teil einen im Wesentlichen geschlossenen magnetischen Kreis bilden, wenn die Pole des ersten Teils gegenüber den Polen des zweiten Teils liegen.

4. Vorrichtung nach einem der vorhergehenden Ansprüche, wobei die zweite magnetisch leitende Struktur einen Abschnitt aus nichtmagnetischem Material (501) umfasst.

5. Vorrichtung nach einem der vorhergehenden Ansprüche, wobei die erste magnetisch leitende Struktur einen Abschnitt aus nichtmagnetischem Material umfasst.

6. Vorrichtung nach einem der vorhergehenden Ansprüche, wobei Wicklungen (191) der Spule an einen elektrischen Verbraucher (192) angeschlossen sind.

7. Leuchte für ein Fahrzeug, umfassend die Vorrichtung nach Anspruch 1 und eine Lichtquelle, die elektrisch mit der Spule verbunden ist.

8. Verfahren zum Erzeugen von elektrischem Strom für ein Fahrrad unter Verwendung einer Vorrichtung, umfassend ein erstes und ein zweites Teil, die lösbar an Fahrzeugteilen des Fahrrads befestigt sind, wobei eines der Fahrzeugteile ein Rad ist, das in Bezug zu dem anderen drehbar befestigt ist, wobei
- das zweite Teil (120) mindestens einen magnetischen Pol, eine Spule (122) mit einem Kern (123) und einen zweiten Permanentmagneten (121) umfasst, der magnetisch mit dem Kern verbunden ist, um den Kern einem statischen magnetischen Fluss auszusetzen, und **dadurch gekennzeichnet, dass**
- das erste Teil (110) mindestens einen weiteren magnetischen Pol umfasst, der beim Passieren des ersten Teils am zweiten Teil dem zweiten Teil gegenüber angeordnet ist, einen ersten Permanentmagneten (111), der beim Passieren des ersten Teils am zweiten Teil eine Änderung des statischen magnetischen Flusses verursacht, wobei die Änderung des statischen magnetischen Flusses einen elektrischen Strom in der Spule erzeugen kann, wobei
- das erste Teil weiterhin eine erste magnetisch leitende Struktur (314) umfasst, die magnetisch mit dem ersten Permanentmagneten verbunden ist, um einen ersten und zweiten magnetischen Pol (311, 312) zu bilden, und/oder
- das zweite Teil weiterhin eine zweite magnetisch leitende Struktur (324) umfasst, die magnetisch mit dem zweiten Permanentmagneten verbunden ist, um einen ersten und zweiten magnetischen Pol (321, 322) zu bilden, wobei das Verfahren umfasst
- Aussetzen des Kerns der Spule des zweiten Teils an den statischen magnetischen Fluss, der durch den zweiten magnetisch mit dem Kern verbundenen Permanentmagneten erzeugt wird und
- wiederholtes Passieren des ersten Teils umfassend den ersten Permanentmagneten am zweiten Teil, um eine Änderung des statischen magnetischen Flusses zu verursachen, wobei die Änderung des statischen magnetischen Flusses einen elektrischen Strom in der Spule erzeugen kann, wobei jede Passage des ersten Teils am zweiten Teil den zweiten Teil aufgrund des ersten und zweiten Pols (321, 322; 311, 312) des ersten Teils und/oder des zweiten Teils ein erstes und ein zweites Mal magnetisiert.

## Revendications

1. Dispositif (100) pour bicyclette destiné à générer du courant électrique, le dispositif comprenant une première et une deuxième partie (110, 120) pouvant être fixées sur des pièces de véhicule (203, 204) de la bicyclette, l'une des pièces de véhicule étant une roue montée de manière rotative par rapport à l'autre, dans lequel
- la deuxième partie (120) comprend au moins un pôle magnétique, une bobine (122) dotée d'un noyau (123) et un deuxième aimant permanent (121), connecté magnétiquement au noyau, pour soumettre le noyau à un flux magnétique statique, et **caractérisé en ce que**
- la première partie (110) comprend au moins un autre pôle magnétique disposé de manière à se trouver face à la deuxième partie lors du passage de la première partie par rapport à la deuxième partie, un premier aimant permanent (111) destiné à provoquer un changement du flux magnétique statique, lors du passage de la première partie par rapport à la deuxième partie, ce changement du flux magnétique statique étant capable de générer un courant électrique dans la bobine, dans lequel
- la deuxième partie comprend en outre une deuxième structure magnétiquement conductrice (324) connectée magnétiquement au deuxième aimant permanent pour former un premier et un deuxième pôle magnétique (321, 322), de manière à permettre la magnétisation de la deuxième partie une première et une deuxième fois quand la première partie passe la deuxième partie, et/ou dans lequel
- la première partie comprend en outre une première structure magnétiquement conductrice (314) connectée magnétiquement au premier aimant permanent pour former un premier et un deuxième pôle magnétique (311, 312), de manière à permettre la magnétisation de la deuxième partie une première et une deuxième fois quand la première partie passe la deuxième partie.

2. Dispositif selon l'une quelconque des revendications précédentes, dans lequel les deux pôles magnétiques de la première partie (110) sont disposés de manière à être connectés magnétiquement aux deux pôles magnétiques de la deuxième partie (120) lors du passage de la première partie par rapport à la deuxième partie.

3. Dispositif selon l'une quelconque des revendications précédentes, dans lequel la première partie et la deuxième partie forment un circuit magnétique essentiellement fermé quand les pôles de la première partie sont opposés aux pôles de la deuxième partie.

4. Dispositif selon l'une quelconque des revendications précédentes, dans lequel la deuxième structure magnétiquement conductrice comprend une section en matériau non magnétique (501).

5. Dispositif selon l'une quelconque des revendications précédentes, dans lequel la première structure magnétiquement conductrice comprend une section en matériau non magnétique.

6. Dispositif selon l'une quelconque des revendications précédentes, dans lequel des enroulements (191) de la bobine sont connectés à un consommateur d'électricité (192).

7. Éclairage de véhicule comprenant le dispositif selon la revendication 1 et une source de lumière connectée électriquement à la bobine.

8. Méthode destinée à générer du courant électrique pour une bicyclette utilisant un dispositif comprenant une première et une deuxième partie pouvant être fixées sur des pièces de véhicule de la bicyclette, l'une des pièces de véhicule étant une roue montée de manière rotative par rapport à l'autre, dans laquelle
- la deuxième partie (120) comprend au moins un pôle magnétique, une bobine (122) dotée d'un noyau (123) et un deuxième aimant permanent (121), connecté magnétiquement au noyau, pour soumettre le noyau à un flux magnétique statique, et **caractérisée en ce que**
- la première partie (110) comprend au moins un autre pôle magnétique disposé de manière à se trouver face à la deuxième partie lors du passage de la première partie par rapport à la deuxième partie, un premier aimant permanent (111) destiné à provoquer un changement du flux magnétique statique, lors du passage de la première partie par rapport à la deuxième partie, ce changement du flux magnétique statique étant capable de générer un courant électrique dans la bobine, dans laquelle
- la première partie comprend en outre une première structure magnétiquement conductrice (314) connectée magnétiquement au premier aimant permanent pour former un premier et un deuxième pôle magnétique (311, 312), et/ou
- la deuxième partie comprend en outre une deuxième structure magnétiquement conductrice (324) connectée magnétiquement au deuxième aimant permanent pour former un premier et un deuxième pôle magnétique (321, 322), dans laquelle la méthode comprend
- l'exposition du noyau de la bobine de la deuxième partie au flux magnétique statique créé par le deuxième aimant permanent, connecté magnétiquement au noyau, et
- le passage répétitif de la première partie comprenant le premier aimant permanent par rapport à la deuxième partie pour provoquer un changement du flux magnétique statique, ce changement du flux magnétique statique étant capable de générer un courant électrique dans la bobine, dans laquelle chaque passage de la première partie par rapport à la deuxième partie magnétise la deuxième partie une première et une deuxième fois grâce au premier et au deuxième pôle (321, 322 ; 311, 312) de la première partie et/ou de la deuxième partie.
